# EUROPÄISCHE PATENTSCHRIFT

(11) **EP 1 273 477 B1**
(45) Veröffentlichungstag und Bekanntmachung des Hinweises auf die Patenterteilung: **06.02.2008**
(21) Anmeldenummer: 02014740.1
(22) Anmeldetag: 04.07.2002
(51) Int. Cl.: B60Q 1/12

(54) **Beleuchtungsvorrichtung und Beleuchtungsverfahren zur Beleuchtung eines vor einem Kraftfahrzeug befindlichen Umgebungsbereichs**
Lighting device and method for illuminating a part of the environment in front of the vehicle
Dispositif et procédé d'éclairage d'une partie de l'environnement à l'avant du véhicule

(30) Priorität: 06.07.2001 DE 10132981
(43) Veröffentlichungstag der Anmeldung: 08.01.2003
(73) Patentinhaber: AUDI AG, 85045 Ingolstadt (DE)
(72) Erfinder: Courtin, Jens, 80805 München (DE); Lamberty, Frank, 85051 Ingolstadt (DE)
(74) Vertreter: Thielmann, Frank

(56) Entgegenhaltungen:
- DE-A1- 2 509 300
- DE-A1- 3 342 919
- DE-A1- 19 817 348
- US-A- 1 330 419
- US-A- 1 519 345

## Beschreibung

Die Erfindung betrifft eine Beleuchtungsvorrichtung zur Beleuchtung eines vor einem Kraftfahrzeug befindlichen Umgebungsbereichs, wobei die Beleuchtungsvorrichtung ein Lichtmodul zur Erzeugung eines Lichtstrahlbündels in einer ersten Propagationsrichtung mit einer Lichtquelle und Mitteln zur Lichtbündelung umfaßt. Außerdem umfaßt die Beleuchtungsvorrichtung eine Reflexionseinrichtung, welche derart angeordnet ist, daß sie das Lichtstrahlbündel des Lichtmoduls, welches in der ersten Propagationsrichtung auf die Reflexionseinrichtung fällt, in eine zweite Propagationsrichtung umlenkt. Die Beleuchtungsvorrichtung umfaßt weiterhin ein Bewegungselement zur Änderung der zweiten Propagationsrichtung durch Bewegung der Reflexionseinrichtung.

Derartige oder ähnliche Beleuchtungsvorrichtungen, die im allgemeinen als Frontscheinwerfer genutzt werden, sind hinreichend bekannt. Sie sind heute meist nach zwei Prinzipien ausgeführt: als Reflexions- oder Projektionssystem. Dabei ist eine punktförmige Lichtquelle stets von einem reflektierenden Schirm einseitig begrenzt. Im Brennpunkt bzw. seiner unmittelbaren Nähe ist die Lichtquelle fest oder beweglich gelagert. Die Lichtquelle ist meist als Glühlampe oder als Gasentladungslampe ausgebildet. Im Falle eines Projektionssystems ist noch ein zusätzliches Linsensystem im Strahlengang angeordnet.

Die gesamte Anordnung aus Lichtquelle und den Mitteln zur Lichtbündelung, also dem reflektierenden Schirm, dem Linsensystem und im Falle von Gasentladungslampen dem Lampenvorschaltgerät wird nachfolgend als Lichtmodul bezeichnet.

Um die gesetzlich vorgeschriebene Hell-Dunkel-Grenze einzuhalten, müssen Höhenänderungen des Lichtstrahlbündels, wie sie beispielsweise durch unterschiedliche Beladung des Fahrzeugs entstehen, ausgeglichen werden. Somit ist eine zumindest geringfügige vertikale Schwenkung des Lichtstrahlbündels notwendig. Die Ausleuchtung von Kurven bei der Kurvenfahrt ist durch eine horizontale Schwenkung des Lichtstrahlbündels möglich. Bei vielen heute eingesetzten Systemen erfolgt die automatische Leuchtweiteregelung, also die vertikale Schwenkung des Lichtstrahlbündels, durch Bewegung des gesamten Lichtmoduls.

In modernen Scheinwerfersystemen, insbesondere bei Projektionssystemen, welche Linsen enthalten, und auch beim Einsatz von Gasentladungslampen, welche von einem zusätzlichen Lampenvorschaltgerät gespeist werden, ist das Lichtmodul relativ lang und schwer. Bei einem üblichen Lichtmodul tritt das Lichtstrahlbündel längs seiner Achse aus. Damit erstreckt sich seine Längsachse in Längsrichtung des Fahrzeugs. Durch seine große Baulänge beansprucht das Lichtmodul wertvollen Motorraum, der gerade bei Kleinwagen mit quer eingebautem Frontmotor oder bei Fahrzeugen mit abgeflachter Motorhaube oft nicht vorhanden ist. Zudem ist eine dynamische Leuchtweiteregelung mit einem solchen Lichtmodul sehr aufwendig und auch träge, da hier große Massen bewegt werden müssen.

Abhilfe schafft eine gattungsgemäße Beleuchtungsvorrichtung, wie sie in der deutschen Offenlegungsschrift DE 198 17 348 beschrieben ist. In diesem Fall wird ein fest in ein Fahrzeug eingebautes Lichtmodul zur Erzeugung eines Lichtstrahlbündels eingesetzt. Das Lichtstrahlbündel wird mittels eines beweglichen Spiegels in die gewünschte Richtung zur Ausleuchtung des vor dem Fahrzeug gelegenen Fahrbahnbereichs umgelenkt. Durch diese Umlenkung kann das Lichtmodul nun schräg eingebaut werden, so daß es nicht mehr in den Motorraum hineinragt.
Mit dieser Beleuchtungsvorrichtung ist eine automatische Leuchtweiteregelung durch Bewegung des Spiegels um eine horizontale Achse realisierbar. Allerdings ist diese Beleuchtungsvorrichtung nur mit sehr großem Aufwand auch zur Ausleuchtung von Kurven bei der Kurvenfahrt zu verwenden, da bei seitlicher Schwenkung des Spiegels um eine vertikale Achse die Lichtverteilung kippt. Damit stellen sich bei der Hell-Dunkel-Grenze je nach Schwenkwinkel des Spiegels unterschiedliche Neigungen ein. Um diesen Nachteil zu vermeiden, werden in dieser Druckschrift auch Systeme mit mehreren schwenkbaren Spiegeln vorgestellt. Dies bedeutet jedoch einen wesentlich höheren technischen Aufwand, da mehrere Spiegel mit mehreren Aufhängungen und mehreren Antrieben verwendet und aufeinander abgestimmt werden müssen.

Aus der DE 25 09 300 A1 ist eine gattungsgemäße Beleuchtungsvorrichtung bekannt.

Demgemäß liegt der Erfindung die Aufgabe zugrunde, die gattungsgemäße Beleuchtungsvorrichtung derart weiterzubilden, daß eine Kurvenausleuchtung auf einfache und raumsparende Weise realisierbar ist und eine verbesserte Wanderung der Lichtverteilung im Umgebungsbereich des Fahrzeugs erreicht werden kann. Es ist weiterhin Aufgabe der Erfindung, ein entsprechendes Beleuchtungsverfahren bereitzustellen.

Eine erste erfindungsgemäße Lösung dieser Aufgabe stellt eine gattungsgemäße Beleuchtungsvorrichtung dar, bei der das Lichtmodul und die optische Reflexionseinrichtung mindestens Teil einer Einheit sind, wobei die Einheit und das Bewegungselement derart angeordnet sind, daß die Einheit durch das Bewegungselement bewegbar ist.

Die Lichtquelle kann beispielsweise durch eine Glühlampe oder eine Gasentladungslampe realisiert werden, während die Mittel zur Lichtbündelung beispielsweise reflektierende Schirme, Linsensysteme oder auch Blenden sind. Wird als Lichtquelle eine Gasentladungslampe eingesetzt, so ist meist noch ein Lampenvorschaltgerät, welches zum Speisen der Gasentladungslampe unbedingt notwendig ist, in das Lichtmodul integriert. Dieses Lichtmodul ist nun so ausgelegt, daß es ein Lichtstrahlbündel erzeugt, welches vorzugsweise dem gesetzlich vorgeschriebenen Beleuchtungsprofil entspricht und in der ersten Propagationsrichtung verläuft, die vorzugsweise parallel zur Längsachse des Lichtmoduls liegt. Das von dem Lichtmodul erzeugte Lichtstrahlbündel wird von der Reflexionseinrichtung, beispielsweise einem Spiegel, in die zweite Propagationsrichtung in Richtung des vor dem Fahrzeug liegenden Umgebungsbereichs abgelenkt. Die erfindungsgemäße Beleuchtungsvorrichtung nimmt äußerst wenig Raum ein. Zur Anpassung an die aktuelle Fahrsituation muß das Lichtstrahlbündel bewegt werden. Zur Kurvenausleuchtung bei Kurvenfahrt ist eine horizontale Schwenkung des Lichtstrahlbündels notwendig. Erfindungsgemäß erfolgt eine derartige Ablenkung mittels einer gekoppelten Bewegung des Lichtmoduls und der Reflexionseinrichtung. Das Lichtmodul und die Reflexionseinrichtung bilden zu diesem Zweck eine Einheit. Das Licht des beispielsweise elliptischen Lichtstrahlbündels trifft auch während der Bewegung immer unter dem gleichen Winkel auf die Reflexionseinrichtung, so daß ein Kippen der Lichtverteilung vermieden wird. Als Bewegungsform kommen unter anderem eine Drehung, eine Schwenkung und/oder eine Verschiebung in Betracht. Bei senkrechter Anordnung des Lichtmoduls kann insbesondere durch eine Drehung eine Kurvenausleuchtung äußerst einfach und ohne die Nachteile des Stands der Technik realisiert werden.

Die Einheit ist durch das Bewegungselement drehbar. Diese Drehung erfolgt um eine Achse parallel zu der ersten Propagationsrichtung. Außerdem kann als Achse eine Zentralachse des Lichtstrahlbündels gewählt werden, wobei unter der Zentralachse im Sinne der Erfindung eine Achse im Zentrum bzw. Mittelpunkt des Lichtstrahlbündels zu verstehen ist. Eine solche Drehung ist in der Regel leicht zu realisieren und führt zu einer vorteilhaften Wanderung der Lichtverteilung im Umgebungsbereich des Fahrzeugs.

Als Drehachse kann auch eine Längsachse des Lichtmoduls und/oder der gesamten Einheit gewählt werden, so daß bei der Drehbewegung wenig Raum in Anspruch genommen wird.

Eine weitere besonders vorteilhafte Weiterbildung der Erfindung sieht vor, daß die Reflexionseinrichtung gegenüber dem Lichtmodul innerhalb der Einheit beweglich angeordnet ist.

Beispielsweise kann zwischen der Reflexionseinrichtung und dem Lichtmodul ein Gelenk derartig positioniert sein, daß eine Drehachse des Gelenks näherungsweise senkrecht zur Achse der ersten Propagationsrichtung steht. Eine Drehung um diese Drehachse kann beispielsweise zur Leuchtweiteregelung genutzt werden. Ebenso ist jedoch bei entsprechender Anordnung innerhalb des Fahrzeugs auch eine vertauschte Wirkung der beiden Bewegungsformen denkbar, so daß die Einheit um eine horizontale Achse zum Zwecke der Leuchtweiteregelung und die Reflexionseinrichtung gegen das Lichtmodul um eine vertikale Achse zum Zwecke der Kurvenausleuchtung bewegt wird.

Zur vollständigen Steuerung der Beleuchtung können also mindestens zwei Bewegungsformen vorgesehen sein, nämlich eine Bewegung von Lichtmodul und Reflexionseinrichtung durch Bewegung der Einheit und eine Bewegung der Reflexionseinrichtung alleine.

Anstelle des aufgeführten Gelenks oder zusätzlich zu dem Gelenk kann auch ein anderer Bewegungsmechanismus vorgesehen sein, der beispielsweise eine Verschiebung der Reflexionseinrichtung entlang der Achse der ersten Propagationsrichtung ermöglicht und so eine Änderung der zweiten Propagationsrichtung bewirkt.

In einer weiteren besonders vorteilhaften Ausführungsform der Erfindung sind das Lichtmodul und die Reflexionseinrichtung derart angeordnet, daß in einem normalen Betriebszustand der Winkel zwischen der ersten und der zweiten Propagationsrichtung näherungsweise 90 Grad beträgt. Somit ergibt sich in einem normalen Beleuchtungsfall eine nahezu rechtwinklige Ablenkung des Lichts wodurch das Lichtmodul sehr platzsparend senkrecht zur Fahrtrichtung angeordnet werden kann. Ein exakter Winkel von 90 Grad kann allerdings nur in einem stationären Zustand eingehalten werden, da der Winkel bei einer Nachführung bzw. Regelung zur Steuerung der Beleuchtung selbstverständlich verändert werden muß.

Eine weitere vorteilhafte Ausgestaltung der Erfindung besteht darin, daß das Lichtmodul so angeordnet ist, daß die erste Propagationsrichtung nahezu vertikal verläuft. Zur Leuchtweiteregelung kann die Reflexionseinrichtung dann beispielsweise mittels eines Stellelements gegenüber dem Lichtmodul entsprechend gekippt werden. Das Stellelement kann beispielsweise durch einen Schrittmotor realisiert sein. Zur Kurvenausleuchtung bei Kurvenfahrt ist eine horizontale Schwenkung des Lichtstrahlbündels notwendig. Hierzu kann dann die Einheit mit dem Lichtmodul und der Reflexionseinrichtung durch das Bewegungselement jeweils um einen bestimmten Winkel gedreht werden. Dadurch trifft das Licht des beispielsweise elliptischen Lichtstrahlbündels immer unter dem gleichen Winkel auf die Reflexionseinrichtung, so daß ein Kippen der Lichtverteilung und damit auch der Hell-Dunkel-Grenze vermieden wird. Da die Leuchtweiteregulierung in diesem Fall durch das Kippen der Reflexionseinrichtung alleine erfolgt, ist hier nur eine geringe Masse zu bewegen. Somit kann eine dynamische Leuchtweiteregulierung mit hoher Regelgeschwindigkeit realisiert werden. Das unerwünschte Zittern der Beleuchtung läßt sich somit verhindern. Zur Kurvenausleuchtung bei Kurvenfahrt genügt eine niedrigere Stellgeschwindigkeit, da bereits die Bewegung des Lenkrades durch den Fahrer sowie die Fahrtrichtungsänderungen des Fahrzeugs selbst nur relativ langsam erfolgen können.

In einer weiteren Ausgestaltung der Erfindung ist das Lichtmodul derartig angeordnet, daß die erste Propagationsrichtung näherungsweise vertikal nach oben verläuft, das Lichtmodul also unterhalb einer Lichtaustrittsöffnung angeordnet ist. Diese Anordnung ist gerade bei einem PKW besonders vorteilhaft. Eine entgegengesetzte Anordnung wäre beispielsweise bei einem LKW von Vorteil, bei dem hinreichend Bauraum oberhalb der Lichtaustrittsöffnung zur Verfügung steht.

In einer Weiterbildung der Erfindung kann die Reflexionseinrichtung derart gestaltet sein, daß sie in eine Ruheposition schwenkbar ist. In dieser Ruheposition beträgt der Winkel zwischen der ersten und zweiten Propagationsrichtung näherungsweise 180 Grad, so daß die Reflexionseinrichtung das Lichtmodul abdeckt. Auf diese Weise wird ein mechanischer Schutz für den Fall bereitgestellt, daß die normale Beleuchtung nicht benötigt wird.

In einer weiteren Ausgestaltung der Erfindung besitzt die Reflexionseinrichtung eine Aussparung, durch die in der Ruheposition Streulicht austreten kann. Somit kann beispielsweise zu Signalisierungszwecken auch bei einer Reflexionseinrichtung in Ruheposition Licht ausgesendet werden. Die Beleuchtungsvorrichtung kann so auch die Funktion eines Standlichts ausüben.

Eine zweite erfindungsgemäße Lösung der obigen Aufgabe stellt ein Beleuchtungsverfahren zur Beleuchtung eines vor einem Kraftfahrzeug befindlichen Umgebungsbereichs dar, bei dem ein Lichtstrahlbündel in einer ersten Propagationsrichtung durch ein Lichtmodul mit einer Lichtquelle und Mitteln zur Lichtbündelung erzeugt wird. Weiterhin wird das Lichtstrahlbündel in eine zweite Propagationsrichtung mittels einer Reflexionseinrichtung umgelenkt und die zweite Propagationsrichtung wird durch Drehen einer Einheit, die das Lichtmodul und die Reflexionseinrichtung umfaßt, mittels eines Bewegungselements um eine Achse parallel zu der ersten Propagationsrichtung geändert.

Durch das erfindungsgemäße Beleuchtungsverfahren können auch die oben im Zusammenhang mit der erfindungsgemäßen Beleuchtungsvorrichtung aufgeführten Funktionen realisiert werden. Ebenso gelten auch die dort beschriebenen Vorteile für das erfindungsgemäße Beleuchtungsverfahren.

Die Erfindung wird nachstehend anhand von Ausführungsbeispielen unter Bezugnahme auf die Zeichnungen beschrieben. Es zeigen:
- Fig. 1: eine schematisch dargestellte erfindungsgemäße Beleuchtungsvorrichtung; und
- Fig. 2: eine schematische Darstellung einer bevorzugten Position einer erfindungsgemäßen Beleuchtungsvorrichtung in einem Fahrzeug.

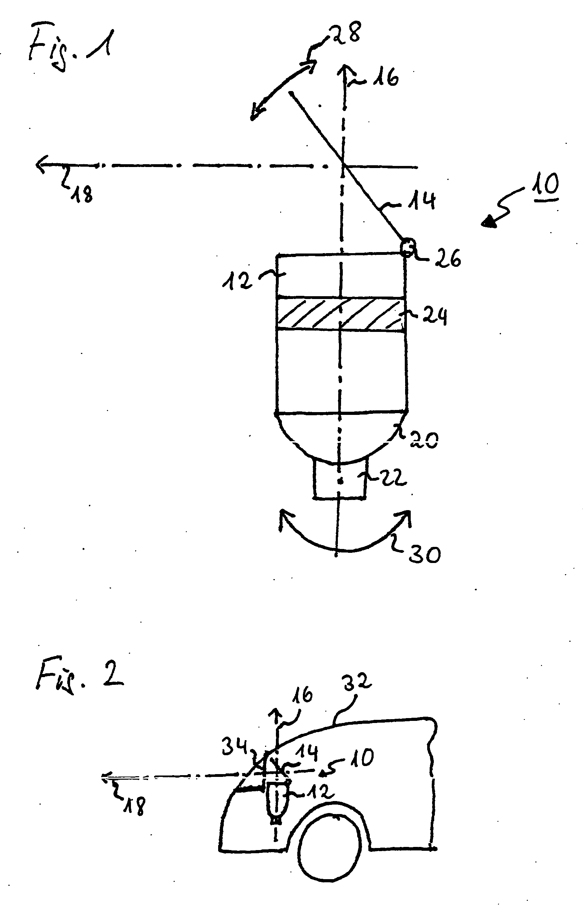

In Fig. 1 ist beispielhaft eine erfindungsgemäße Beleuchtungsvorrichtung 10 dargestellt, die ein Lichtmodul 12 und eine Reflexionseinrichtung 14 umfaßt. Das Lichtmodul 12 emittiert ein Lichtstrahlbündel in einer ersten Propagationsrichtung 16. Dieses Lichtstrahlbündel wird durch die Reflexionseinrichtung 14 in eine zweite Propagationsrichtung 18 umgelenkt. Diese zweite Propagationsrichtung 18 ist bei einer in einem Fahrzeug angeordneten Beleuchtungsvorrichtung 10 so gewählt, daß der vor dem Fahrzeug liegende Straßenraum ausgeleuchtet wird. Das Lichtmodul 12 selbst besteht beispielhaft aus einem Reflektor 20 mit in bzw. nahe dessen Brennpunkt angeordneter Lichtquelle 22 und im Falle eines Projektionssystems einer nachgeschalteten Linse 24. Die Reflexionseinrichtung 14 ist um eine Achse senkrecht zur ersten Propagationsrichtung 16 schwenkbar angeordnet. Die Schwenkbewegung kann hier beispielsweise um ein Gelenk 26 erfolgen. Die Richtung der Schwenkbewegung ist durch einen ersten Pfeil 28 symbolisiert. Eine Einheit, um das Lichtmodul 12 und die Reflexionseinrichtung 14 umfaßt, kann außerdem um eine Achse parallel zur ersten Propagationsrichtung 16 gedreht werden. Dies verdeutlicht der zweite Pfeil 30.

In Fig. 2 ist schematisch eine bevorzugte Position der erfindungsgemäßen Beleuchtungsvorrichtung 10 innerhalb eines Frontbereichs 32 eines Fahrzeugs dargestellt. Das von dem Lichtmodul 12 in der ersten Propagationsrichtung 16 abgestrahlte Licht wird durch die Reflexionseinrichtung 14 in die zweite Propagationsrichtung 18 gelenkt, und das Licht tritt durch eine Streuscheibe 34 aus dem Frontbereich 32 des Fahrzeugs aus.

## Patentansprüche

1. Beleuchtungsvorrichtung zur Beleuchtung eines vor einem Kraftfahrzeug befindlichen Umgebungsbereichs
umfassend
- ein Lichtmodul (12) zur Erzeugung eines Lichtstrahlbündels in einer ersten Propagationsrichtung (16) mit einer Lichtquelle (22) und Mitteln zur Lichtbündelung (20, 24),
- eine Reflexionseinrichtung (14), welche derart angeordnet ist, daß sie das Lichtstrahlbündel des Lichtmoduls (12), welches in der ersten Propagationsrichtung (16) auf die Reflexionseinrichtung (14) fällt, in eine zweite Propagationsrichtung (18) umlenkt,
- ein Bewegungselement zur Änderung der zweiten Propagationsrichtung durch Bewegung der Reflexionseinrichtung (14), und
- das Lichtmodul (12) und die optische Reflexionseinrichtung (14) mindestens Teil einer Einheit sind, wobei die Einheit und das Bewegungselement derart angeordnet sind, daß die Einheit durch das Bewegungselement bewegbar ist,
**dadurch gekennzeichnet, daß**
die Einheit durch das Bewegungselement um eine Achse parallel zu der ersten Propagationsrichtung (16) drehbar ist.

2. Beleuchtungsvorrichtung nach Anspruch 1,
**dadurch gekennzeichnet, daß**
die Achse eine Zentralachse des Lichtstrahlbündels ist.

3. Beleuchtungsvorrichtung nach einem der vorhergehenden Ansprüche,
**dadurch gekennzeichnet, daß**
die Reflexionseinrichtung (14) gegenüber dem Lichtmodul (12) innerhalb der Einheit beweglich angeordnet ist.

4. Beleuchtungsvorrichtung nach Anspruch 3,
**dadurch gekennzeichnet, daß**
zwischen der Reflexionseinrichtung (14) und dem Lichtmodul (12) ein Gelenk (26) derartig angeordnet ist, daß eine Drehachse des Gelenks (26) näherungsweise senkrecht zur Achse der ersten Propagationsrichtung (16) steht.

5. Beleuchtungsvorrichtung nach einem der vorhergehenden Ansprüche,
**dadurch gekennzeichnet, daß**
im normalen Betriebszustand der Beleuchtungsvorrichtung (10) der Winkel zwischen der ersten Propagationsrichtung (16) und der zweiten Propagationsrichtung (18) näherungsweise 90 Grad beträgt.

6. Beleuchtungsvorrichtung nach einem der vorhergehenden Ansprüche,
**dadurch gekennzeichnet, daß**
das Lichtmodul (12) so angeordnet ist, daß die erste Propagationsrichtung (16) näherungsweise vertikal verläuft.

7. Beleuchtungsvorrichtung Anspruch 6,
**dadurch gekennzeichnet, daß**
das Lichtmodul (12) so angeordnet ist, daß die erste Propagationsrichtung (16) näherungsweise vertikal nach oben verläuft.

8. Beleuchtungsvorrichtung nach einem der vorhergehenden Ansprüche,
**dadurch gekennzeichnet, daß**
die Reflexionseinrichtung (14) in eine Ruheposition schwenkbar ist, bei der der Winkel zwischen der ersten Propagationsrichtung (16) und der zweiten Propagationsrichtung (18) näherungsweise 180 Grad beträgt, so daß die Reflexionseinrichtung (14) das Lichtmodul (12) abdeckt.

9. Beleuchtungsvorrichtung nach Anspruch 8,
**dadurch gekennzeichnet, daß**
die Reflexionseinrichtung (14) eine Aussparung besitzt, durch die in der Ruheposition Streulicht austreten kann.

10. Beleuchtungsverfahren zur Beleuchtung eines vor einem Kraftfahrzeug befindlichen Umgebungsbereichs,
umfassend folgende Schritte:
- Erzeugen eines Lichtstrahlbündels in einer ersten Propagationsrichtung (16) durch ein Lichtmodul (12) mit einer Lichtquelle (22) und Mitteln zur Lichtbündelung (20, 24);
- Umlenken des Lichtstrahlbündels in eine zweite Propagationsrichtung (18) mittels einer Reflexionseinrichtung (14); und
- Ändern der zweiten Propagationsrichtung (18) durch Drehen einer Einheit, die das Lichtmodul (12) und die Reflexionseinrichtung (14) umfasst, mittels eines Bewegungselements um eine Achse parallel zu der ersten Propagationsrichtung (16).

## Claims

1. Lighting device for the lighting of an area of the environment situated in front of a motor vehicle
comprising
a light module (12) for the production of a beam of light rays in a first direction of propagation (16) with a light source (22) and means for beaming the light (20, 24),
a reflection installation (14) which is so arranged that it deflects the beam of light rays of the light module (12), which in the first direction of propagation falls on to the reflection installation (14), into a second direction of propagation (18),
a movement element for the changing of the second direction of propagation by movement of the reflection installation (14),
and the light module (12) and the optical reflection installation (14) are at least part of a unit where the unit and the movement element are so arranged that the unit can be moved by the movement element,
**characterised by** the fact that
the unit can be rotated by the movement element around an axis parallel to the first direction of propagation (16).

2. Lighting device according to claim 1,
**characterised by** the fact that
the axis is a central axis of the beam of light rays.

3. Lighting device according to one of the foregoing claims,
**characterised by** the fact that
the reflection installation (14) is movably arranged within the unit with regard to the light module (12).

4. Lighting device according to claim 3.
**characterised by** the fact that
between the reflection installation (14) and the light module (12) a joint (26) is so arranged that an axis of rotation of the joint (26) stands approximately vertical to the axis of the first direction of propagation (16).

5. Lighting device according to one of the foregoing claims,
**characterised by** the fact that
in the normal state of operation of the lighting device (10) the angle between the first direction of propagation (16) and the second direction of propagation (18) amounts to approximately 90 degrees.

6. Lighting device according to one of the foregoing claims,
**characterised by** the fact that
the light module (12) is so arranged that the first direction of propagation (16) runs approximately vertically.

7. Lighting device claim 6,
**characterised by** the fact that
the light module (12) is so arranged that the first direction of propagation (16) runs approximately vertically upwards.

8. Lighting device according to one of the foregoing claims,
**characterised by** the fact that
the reflection installation (14) in the rest position can be swivelled, where the angle between the first direction of propagation (16) and the second direction of propagation (18) amounts to approximately 180 degrees, so that the reflection installation (14) covers the light module (12).

9. Lighting device according to claim 8,
**characterised by** the fact that
the reflection installation (14) has a cut-out through which in the rest position stray light can come out.

10. Lighting procedure for the lighting of an area of the environment situated in front of a motor vehicle,
comprising the following steps
- Production of a beam of light rays in a first direction of propagation (16) by a light module (12) with a light source (22) and means for the beaming of light (20, 24);
- Deflecting of the beam of light rays into a second direction of propagation (18) by means of a reflection installation (14); and
- Changing of the second direction of propagation (18) through a rotation of a unit which comprises the light module (12) and the reflection installation (14) by means of a movement element around an axis parallel to the first direction of propagation (16).

## Revendications

1. Dispositif d'éclairage pour éclairer une zone environnante se trouvant devant un véhicule automobile, comprenant
- un module lumineux (12) pour produire un faisceau de rayons lumineux dans une première direction de propagation (16) avec une source lumineuse (22) et des moyens pour former le faisceau lumineux (20, 24),
- un dispositif réflecteur (14) qui est placé de manière à dévier le faisceau de rayons lumineux du module lumineux (12), lequel tombe dans la première direction de propagation (16) sur le dispositif réflecteur (14), dans une deuxième direction de propagation (18),
- un élément de déplacement pour modifier la deuxième direction de propagation en déplaçant le dispositif réflecteur (14), et
- le module lumineux (12) et le dispositif réflecteur optique (14) font au moins partie d'une unité, moyennant quoi l'unité et l'élément de déplacement sont placés de telle manière que l'unité peut être déplacée par l'élément de déplacement,
**caractérisé en ce que**
l'unité peut être tournée par l'élément de déplacement sur un axe parallèle à la première direction de propagation (16).

2. Dispositif d'éclairage selon la revendication 1,
**caractérisé en ce que**
l'axe est un axe central du faisceau de rayons lumineux.

3. Dispositif d'éclairage selon l'une quelconque des revendications précédentes,
**caractérisé en ce que**
le dispositif réflecteur (14) est placé de manière mobile face au module lumineux (12) à l'intérieur de l'unité.

4. Dispositif d'éclairage selon la revendication 3,
**caractérisé en ce que**
entre le dispositif réflecteur (14) et le module lumineux (12) une articulation est placée de façon à ce qu'un axe de rotation de l'articulation (26) soit presque vertical à l'axe de la première direction de propagation (16).

5. Dispositif d'éclairage selon l'une quelconque des revendications précédentes,
**caractérisé en ce que**
en état de fonctionnement normal du dispositif d'éclairage (10), l'angle entre les première (16) et deuxième (18) directions de propagation est de presque 90 degrés.

6. Dispositif d'éclairage selon l'une quelconque des revendications précédentes,
**caractérisé en ce que**
le module lumineux (12) est placé de manière à ce que la première direction de propagation (16) soit pratiquement verticale.

7. Dispositif d'éclairage selon la revendication 6,
**caractérisé en ce que**
le module lumineux (12) est placé de manière à ce que la première direction de propagation (16) soit pratiquement verticale vers le haut.

8. Dispositif d'éclairage selon l'une quelconque des revendications précédentes,
**caractérisé en ce que**
le dispositif réflecteur (14) peut pivoter dans une position de repos, dans laquelle l'angle entre les première (16) et deuxième (18) directions de propagation est de presque 180 degrés, de façon à ce que le dispositif réflecteur (14) recouvre le module lumineux (12).

9. Dispositif d'éclairage selon la revendication 8,
**caractérisé en ce que**
le dispositif réflecteur (14) comporte un évidement par lequel la lumière diffuse peut sortir en position de repos.

10. Dispositif d'éclairage pour éclairer une zone environnante se trouvant devant un véhicule automobile, comprenant les étapes suivantes :
- la production d'un faisceau de rayons lumineux dans une première direction de propagation (16) par un module lumineux (12) avec une source lumineuse (22) et des moyens pour former le faisceau lumineux (20, 24) ;
- la déviation du faisceau de rayons lumineux dans une deuxième direction de propagation (18) au moyen du dispositif réflecteur (14) ; et
- la modification de la deuxième direction de propagation (18) par rotation d'une unité qui comprend le module lumineux (12) et le dispositif réflecteur (14), au moyen d'un élément de déplacement sur un axe parallèle à la première direction de propagation (16).
